# EUROPEAN PATENT APPLICATION

(11) **EP 2 149 317 A1**
(43) Date of publication of application: **03.02.2010**
(21) Application number: 08748498.6
(22) Date of filing: 20.05.2008
(51) Int. Cl.: A47B 96/20, A47B 7/00, F16B 12/10

(54) **COMBINED FURNITURE MADE OF BOARDS**

(30) Priority: 15.05.2007 CN 200710008977
(71) Applicant: Leng, Luhao, Xiamen Fujian 361009 (CN)
(72) Inventor: Leng, Luhao, Xiamen Fujian 361009 (CN)
(74) Representative: Verscht, Thomas Kurt Albert
(86) International application number: PCT/CN2008/000942
(87) International publication number: WO 2008/138227

(57) **Abstract**

A combined panel furniture comprises longitudinal (2,3) and transverse boards assembled vertically, wherein said longitudinal(2,3) and said transverse(1,4) boards are made from plastic composite boards, reinforce frames (22) are disposed near the edges; The lower edges or upper edges of the longitudinal boards (2,3) are connected with the side edges of the transverse boards (1,4) by the reinforce frames (22) in the bevel direction at side edges. The longitudinal boards (2,3) and transverse boards (1,4) are connected fixedly by the two reinforce frames that are connected with each other by clamping or locking in the bevel direction at side edges.

## Description

### FIELD OF THE INVENTION

The present invention relates to a structure of furniture, more particularly, to a combined furniture which has a plurality of combination types.

### BACKGROUND OF THE INVENTION

Panel furniture such as bookshelf, supporter, wardrobe, TV cabinet and store cabinet are commonly used in our daily life, and they have various structure. Usually, these panel furniture are fixed type, i.e. they has predetermined shape and structure, and can not be assembled into different structures according to different requirements of users. Although some portions of some furniture can be adjusted according to requirement, e.g. the board of the wardrobe can be added or reduced, and the board of the bookshelf can be combined according to requirement, but these adjustments are partially and limitedly, they can not be assembled by the users freely. And these partial assembly just to simply place the board such as the separate board of the wardrobe placed on the layer positioning parts, because the connection between the parts is not fixed connection type, so these assembly only can be used in the internal structure of the furniture.

Nowadays, there is a kind of combined computer table which can be disassembled into several boards in transport and then be assembled again in use, each one board is locked with the other boards by locking parts, and the two connected board usually formed a "T"-shaped connection, the side surface of the first board connected to the plane surface of the second board, the first board having holes through the two side surfaces, and the second board having L-shaped holes disposed between the plane surface and the side surface near the plane surface, the locking part comprises a base and a bolt, the base inserted into the L-shaped hole from the side surface of the second board, and the bolt pass through the hole of the first board, and inserted into the L-shaped hole to lock with the base so that the two boards formed T-shape connection. Because the contacting surfaces are the side surface of the first board and the plane surface of the second board respectively, the second board is easily to swing relative to the first board, thus the connection between them is abrupt, evenly may make the board broken.

### SUMMARRY OF THE INVENTION

The primary object of the present invention is to provide a combined panel furniture which can be assembled according to requirement of users and has stable structure.

This object is achieved by providing:

### Solution 1:

A combined panel furniture comprises longitudinal and transverse boards assembled vertically, wherein said longitudinal and said transverse boards are made from plastic composite boards, reinforce frames are disposed near the edges; the longitudinal and the transverse boards are connected with each other through the reinforced frames; and the two connected reinforced frames are clamped or locked with each other in the bevel direction at side to fixedly connect the longitudinal and the transverse boards.

Said reinforce frame has a section of an isosceles triangle, the two equal sides of the triangle are the connecting surface of the longitudinal and transverse boards respectively and formed a slant surface to the board body respectively, the connecting surfaces between the two reinforce frames are parallel to each other and the connection is achieved by bolt or by tenon and moretise set on the two connecting surface. Or: the connecting surface of said reinforce frames is slant relative to the board body, the two reinforce frames connected to each other via their slant surfaces respectively, and fixed by bolt or by tenon-and-mortise connection to connect the longitudinal board with the transverse board in the bevel direction.

Said longitudinal and transverse boards have reinforce frames in the two ends near the edges of the connecting sides respectively.

Furthermore, said longitudinal and transverse boards are plastic composite boards, said plastic composite boards comprises a plastic surface board and a plastic bottom board, and filling material filled between the two boards, said reinforce frames are hardware, said filling material is honeycomb cardboard, foam board or injection part.

Said injection part connected to the plastic surface board and bottom board by gluing or welding, the plastic surface board and bottom board are monolithic structure with certain shape by extrusion or vacuum-molded after extrusion, said injection part is one or more monolithic structure formed by injection directly and is corresponding to the shape of the plastic surface and bottom surface.

Said plastic board has support frames around the honeycomb cardboard or foam board, the reinforce frames connected to the support frames or the support frame and the reinforce frame is an integral hardware.

Said reinforce frames comprises a closed frame or U-shaped frame consisted of pipe fittings or profiles and reinforce parts mounted in the corners of the plastic composite board, said reinforce parts in the corners are hardware or plastic parts.

Said reinforce frames can be separate hardware or pipe fittings or profiles, or II-shaped or H-shaped frames formed by pipe fittings or profiles.

Said longitudinal board and transverse board has texture or pattern on the surface formed by printing or transfer film, and there is thermo curing or UV curing varnish spayed on the texture or pattern.

The surface of said longitudinal board and transverse board composited with a film with texture or pattern.

The side edge of said transverse board connected to the bottom edge or top edge of the longitudinal board in 45 degree angle.

### Solution 2:

A combined panel furniture comprises longitudinal and transverse boards assembled vertically, wherein said longitudinal and said transverse boards are made from plastic composite boards, reinforce frames are disposed near the edges; further comprises connecting parts which are separate to said longitudinal and transverse boards and locked with the reinforce frames, the bottom edge or top edge of longitudinal board connected to the transverse board in bevel direction via connecting parts, and the connecting portion of the two connected parts are clamped or locked with each other to fixedly connect the longitudinal board with the transverse board.

Said connecting parts are hardware extruded profiles or cast parts.

Said connecting surface of said connecting part is a slant surface corresponding to the board body, the two connecting parts connecting with each other by their parallel slant surface respectively, the two connecting slant surfaces has tenon and corresponding mortise respectively.

Furthermore, said longitudinal and transverse boards are plastic composite boards, said plastic composite boards comprises a plastic surface board and a plastic bottom board, and filling material filled between the two boards, said reinforce frames are hardware, said filling material is honeycomb cardboard, foam board or injection parts.

Said injection parts connected to the plastic surface board and bottom board by gluing or welding, the plastic surface board and bottom board are monolithic structure with certain shape by extrusion or vacuum-molded after extrusion, said injection parts is one or more monolithic structure formed by injection directly and is corresponding to the shape of the plastic surface and bottom surface.

Said plastic board has support frames around the honeycomb cardboard or foam board, the reinforce frames connected to the support frames or they can be an integral hardware.

Said reinforce frames comprises a closed frame or U-shape frame comprising pipe fittings or profiles , and reinforce part mounted in the corner of the plastic composite board, said reinforce part in the corner is hardware or plastic part.

Said reinforce frames can be separate hardware or pipe fittings or profiles, or II-shaped or H-shaped frames formed by pipe fittings or profiles.

Said longitudinal board and transverse board formed texture or pattern on the surface by printing or transfer film, and there is thermo curing or UV curing varnish spayed on the texture or pattern, and the texture or pattern of the two side surfaces has different color.

The surface of said longitudinal board and transverse board composite with a film with texture or pattern, and the texture or pattern of the two side surfaces has different color.

The side edge of said transverse board connected to the bottom edge or top edge of the longitudinal board in 45 degree angle.

By aforementioned description, the present invention has the following advantages: firstly, the manufactures only provides the longitudinal and the transverse boards of the same or different specifications, then the users can assemble the longitudinal and the transverse boards to obtain the panel furniture with different structures and functions according to the requirement, thus the DIY of the furniture and sufficiently exerting the subjective initiative of the users; secondly, the reinforce frames or connecting parts of connected longitudinal board and transverse board are connected through slant surface, thus the boards can abut against to each other by the co-operated slant surface when form L-shaped, T-shaped or cross-shaped structure, so the structure is fixed and stable; thirdly, the boards are plastic composite board or plastic board, they are friend to the environment and can be recycled, light-weigh, easy-assembled, easy to achieve automatic-process, various shape, plurality of pattern.

### BRIEF DESCRIPTION OF THE DRAWINGS

FIG.1 is a perspective view of the combined panel furniture in embodiment 1 of the present invention;
FIG.2 is a perspective view of the assembled board of the combined panel furniture in embodiment 1 of the present invention.
FIG.3 is an enlarged partial view of A of FIG.2.
FIG.4 is a front view of the longitudinal board of the present invention
FIG.5 is a side view of the longitudinal board of the present invention;
FIG.6 illustrates the assembled boards of the combined panel furniture in embodiment 2 of the present invention;
FIG.7 illustrates the assembled boards of the combined panel furniture in embodiment 3 of the present invention;
FIG.8 illustrates the assembled boards of the combined panel furniture in embodiment 4 of the present invention;
FIG.9 is a perspective view of the connecting parts in embodiment 2 of the present invention;
FIG.10 and FIG.11 are perspective views of the combined panel furniture with the other two structures respectively of the present invention.

### DETAILED DESCRIPTION OF THE PREFERRED EMBODIMENTS

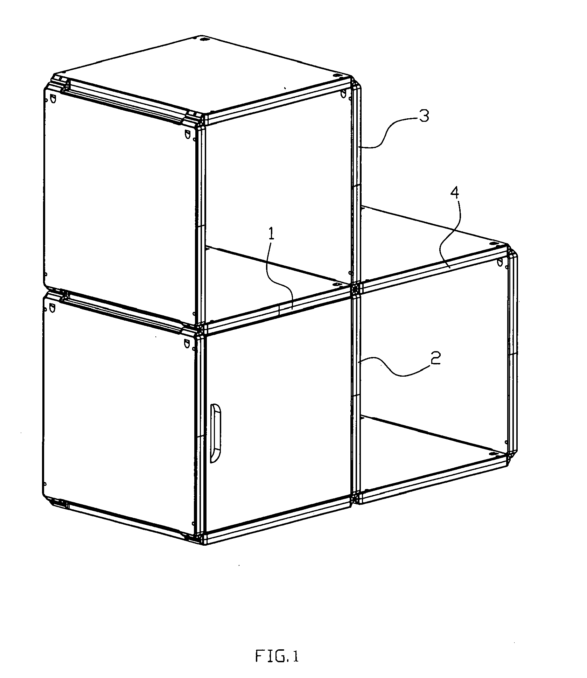

Embodiment 1, referring to FIG.1, a combined panel furniture has a plurality of transverse board 1, 4 and longitudinal board 2, 3, the quantity and the specification of the transverse boards 1, 4 and longitudinal 2, 3 can be set according to requirement. As is shown in FIG.1, the transverse board 1, 4 and longitudinal board 2, 3 are assembled into a cross, they also can be assembled into T-shape or L-shape, thus the combined panel furniture has many shape, and the rear of the combined panel furniture can be assembled with rear boards, the front of the combined panel furniture can be assembled with a door to form a furniture more entirety.

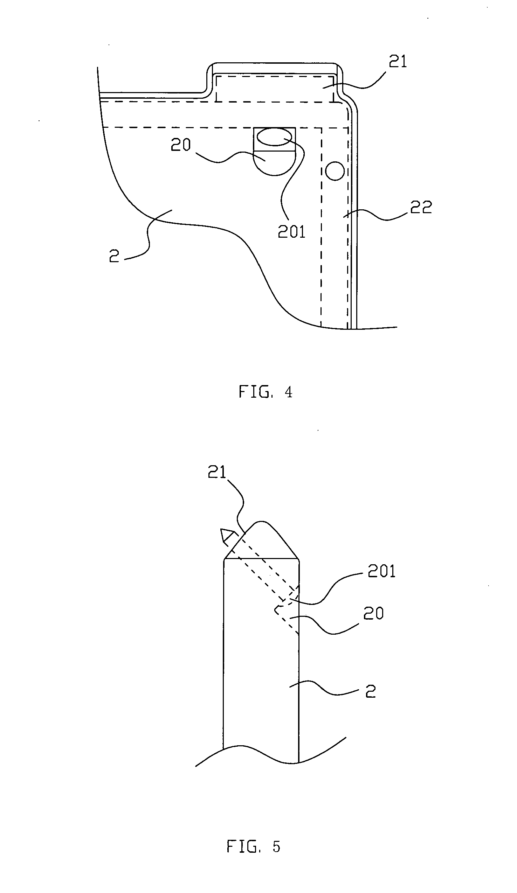

Referring to FIG.4, aforementioned longitudinal board 2 is a plastic composite board, a reinforce frame 22 is embedded near the edge. The plastic composite board comprises a plastic surface board and a plastic bottom board, and filling material is filled between them, said reinforce frame 22 is hardware, the filling material is honeycomb cardboard, foam board or injection part. When the injection part is used here to be the filling material, the injection part is connected to the plastic surface board and the plastic bottom board by gluing or melding, the plastic surface board and bottom board are monolithic structure with certain shape by extrusion or vacuum-molded after extrusion, said injection parts is one or more monolithic structure formed by injection directly and is corresponding to the shape of the plastic surface and bottom surface. Said reinforce frames 22 comprises closed frame or U-shape frame consisted of pipe fittings or profiles and reinforce part disposed in the corner of the plastic composite board, the reinforce part in the corner can be hardware or plastic part; said reinforce frame 22 can be separate hardware, pipe fittings or profiles, or II-shaped frame or H-shaped frame consisted of pipe fittings or profiles.

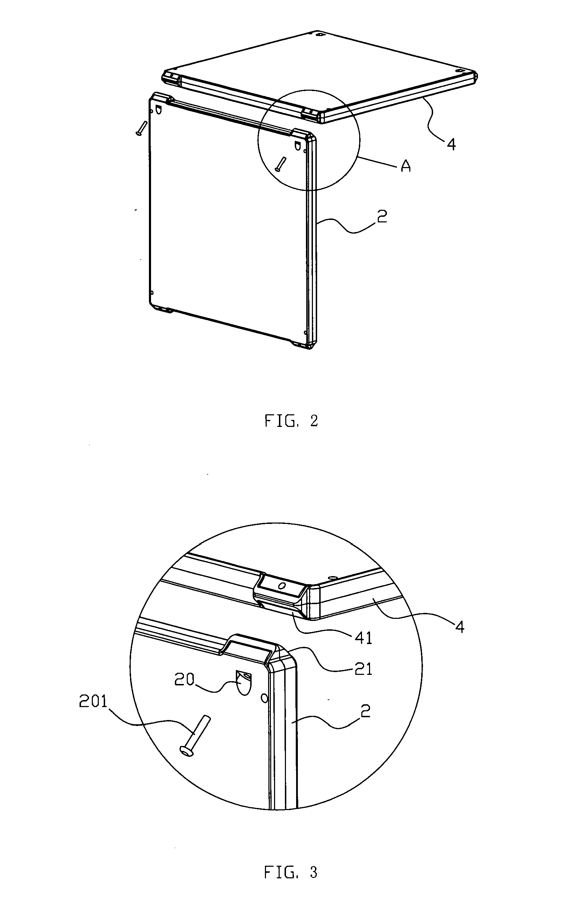

Referring to FIG.2, FIG.3 and FIG.5, the section of the reinforce frame 22 is an isosceles triangle whose base is the edge of the board, the equal sides are the contacting surfaces of the transverse board and longitudinal boards, the contacting surfaces formed a slant surface 21 to the board, the structure of the slant surface 21 is reflected on the side of the longitudinal board 2, i.e. the out layer of the plastic composite board formed a slant surface to correspond to the structure of the reinforce frame 22. The corresponding structure of the transverse board 4 is the same as the structure of the longitudinal board 2. the two reinforce frames of the longitudinal 2 and transverse board 4 abut against each other through the slant surfaces 41, 21 respectively, and a bolt 201 insert from the side of the longitudinal board 2 and pass through the slant surface 21, 41 to lock the longitudinal board 2 with the transverse board 4. Referring to FIG.3 to FIG.5, the side surface of the longitudinal 2 has a groove 20 for reception of the head of the bolt 201.

In a similar way , the connecting structure between the longitudinal board 2 and transverse board 1, or the longitudinal board 3 and transverse board 1, or the transverse board 4 and longitudinal 3 is the same as aforementioned structure.

Moreover, the surface of the longitudinal board 2, 3 and transverse board 1, 4 can be formed texture or pattern by printing, or formed texture or pattern by transfer film, and there is thermo curing or UV curing varnish sprayed on the texture or pattern. The surface of longitudinal board 2, 3 and transverse board 1, 4 can has film with texture or pattern, and the two sides can has different color.

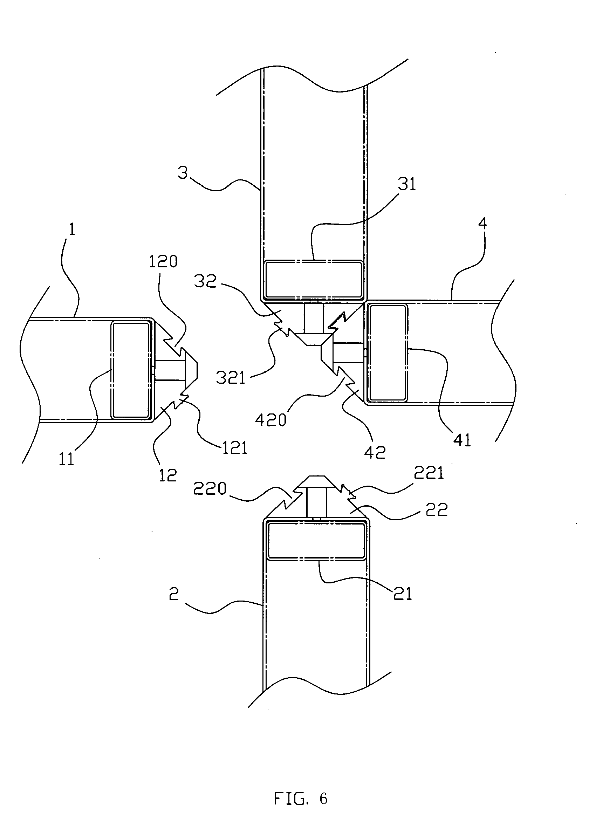

Embodiment 2, the main difference of this embodiment to the embodiment 1 is that the connecting structure between the longitudinal board 2, 3 and transverse board 1, 4 is different. Referring to FIG.6, the longitudinal board 2, 3 and transverse board 1, 4 are plastic composite board, the plastic composite board comprises a plastic surface board and a plastic bottom board with filling material filled between them, and reinforce frames embedded between them also, the filling material can be honeycomb cardboard, foam board or injection parts.

In this embodiment, the reinforce frames can be closed frame or U-shape frame consisted of pipe fittings or profiles and reinforce parts disposed in the corner of the plastic composite board, the reinforce parts in the corner can be hardware or plastic parts; said reinforce frames also can be separate hardware, pipe fittings or profiles, or II-shaped frame or H-shaped frame consisted of pipe fittings or profiles.

In this embodiment, when the injection parts are used here to be the filling material, the injection part is connected to the plastic surface board and the plastic bottom board by gluing or melding, the plastic surface board and bottom board are monolithic structure with certain shape by extrusion or vacuum-molded after extrusion, said injection parts are one or more monolithic structure formed by injection directly and is corresponding to the shape of the plastic surface and bottom surface.

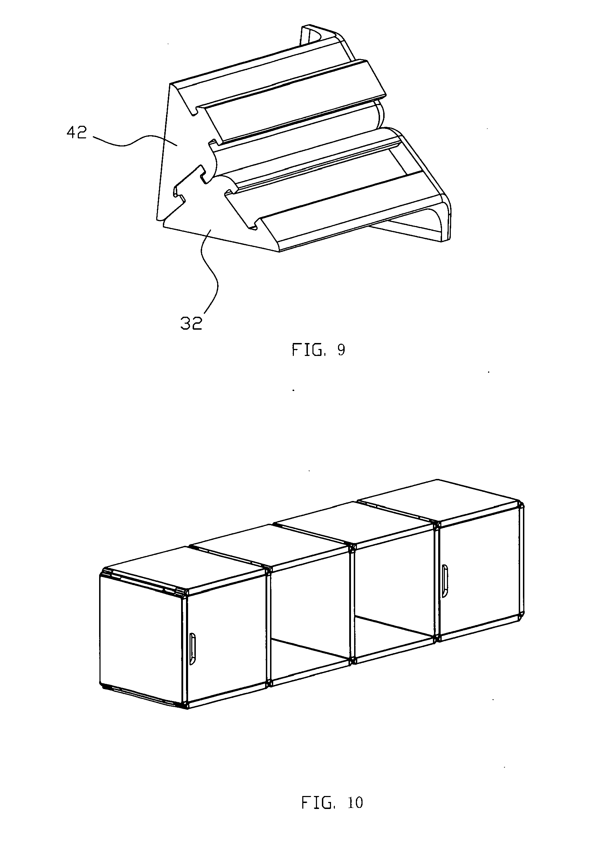

Referring to FIG.6 and FIG.9, each of reinforce frames 21, 31, 11, 41 embedded in the connecting sides of the longitudinal board 2, 3 and transverse board 1, 4 respectively has a fixed connecting part 22, 32, 42, 12 respectively, and each connecting part is locked by a bolt respectively, the two sides of each connecting parts 22, 32, 42, 12 formed two slant surfaces connecting to the other two connecting parts respectively. The connecting slant surfaces of the connecting part 12, 22 has corresponding dovetail 121 and dovetail groove 220 respectively, the connecting slant surfaces of the connecting part 22, 42 has corresponding dovetail 221 and dovetail groove 420 respectively, The connecting slant surfaces of the connecting part 32, 12 has corresponding dovetail 321 and dovetail groove 120 respectively, the connection between the connecting parts 42, 32 is the same as aforementioned. By aforementioned connection, the longitudinal board 2, 3 formed a cross structure with the combined transverse board 1, 4, according to transverse board 1, it connected to the two corresponding slant surface of the longitudinal board 4, 2 via two slant surface, by the cooperation of the slant surface, the structure is stable. In a similar way , the other boards are fixedly connected by the cooperation between the slant surfaces.

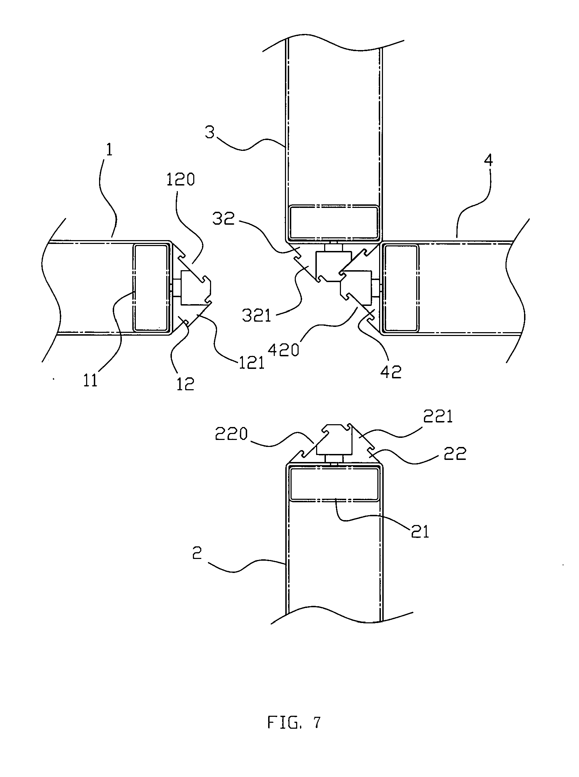

Embodiment 3, referring to FIG.7, it is quite like the embodiment 2, the difference of this embodiment is that the tenon and mortise structure between the slant surfaces is different. In this embodiment T-shaped tenon and mortise replace the dovetail and groove structure in embodiment 2. the corresponding number are 121, 220, 221, 420, 321, 120 in FIG.6 respectively.

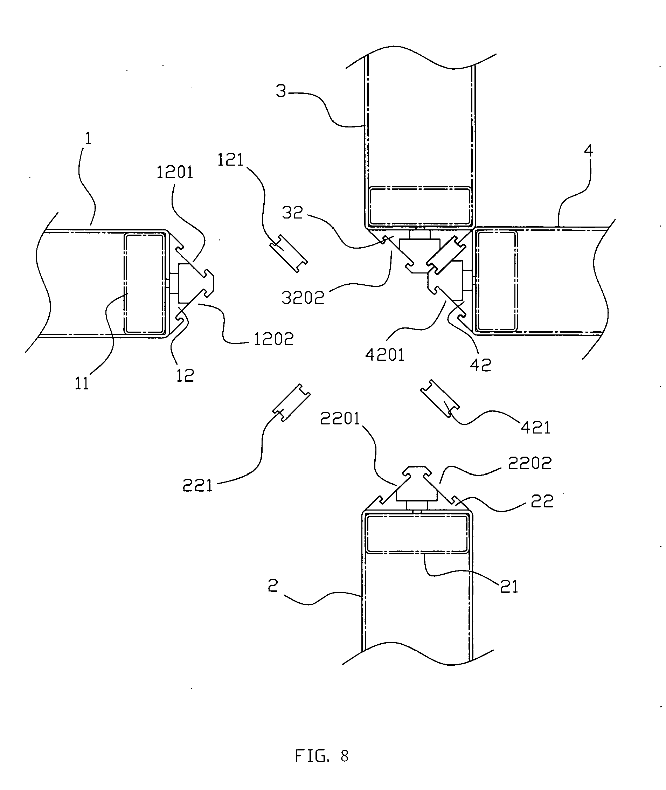

Embodiment 4, referring to FIG.8, the structure is quite like the structure in embodiment 3, the difference is that in this embodiment each slant surface has groove 1201, 1202, 2201, 2202, 3201, 3202 respectively, each pair grooves 1202 and 2201, 2202 and 4202, 3202 and 1201 connected by tenon 221, 421, 121 respectively, the connection between the longitudinal board 3 and transverse board 4 is the same.

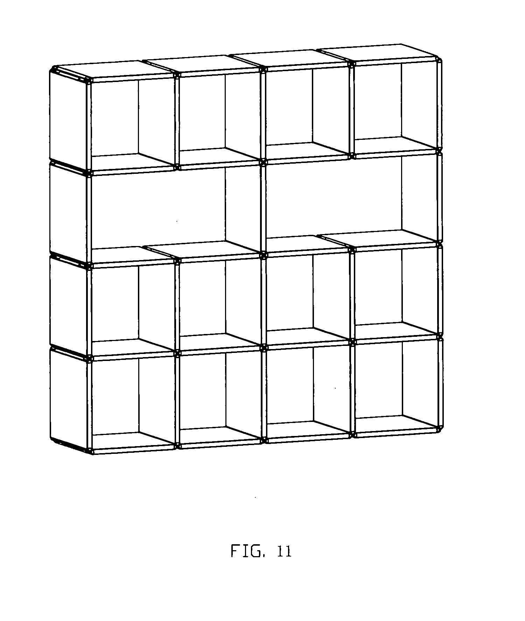

Referring to FIG. 10 and FIG. 11, more type furniture with different structures and functions can be combined by the longitudinal board and transverse board of the present invention.

Thus, while there have shown and described and pointed out fundamental novel features of the invention as applied to a preferred embodiment thereof, it will be understood that various omissions and substitutions and changes in the form and details of the devices illustrated, and in their operation, may be made by those skilled in the art without departing from the spirit of the invention. For example, it is expressly intended that all combinations of those elements and/or method steps which perform substantially the same function in substantially the same way to achieve the same results are within the scope of the invention. Moreover, it should be recognized that structures and/or elements and/or method steps shown and/or described in connection with any disclosed form or embodiment of the invention may be incorporated in any other disclosed or described or suggested form or embodiment as a general matter of design choice. It is the intention, therefore, to be limited only as indicated by the scope of the claims appended hereto.

## Claims

1. A combined panel furniture comprising longitudinal and transverse boards assembled vertically, wherein said longitudinal and said transverse boards are made from plastic composite boards, reinforce frames are disposed near the edges; the longitudinal and the transverse boards are connected with each other through the reinforced frames; and the two connected reinforced frames are clamped or locked with each other in the bevel direction at side to fixedly connect the longitudinal and the transverse boards.

2. A combined panel furniture according to claim 1, wherein said reinforce frame has an section of isosceles triangle, the two equal sides of the triangle are the connecting surface of the longitudinal and transverse boards respectively and formed a slant surface to the board body respectively, the connecting surfaces between the two reinforce frames are parallel to each other and the connection is achieved by bolt or by tenon and moretise set on the two connecting surface.

3. A combined panel furniture according to claim 1, wherein the connecting surface of said reinforce frames is slant relative to the board body, the two reinforce frames connected to each other via their slant surfaces respectively, and fixed by bolt or by tenon-and-mortise connection to connect the longitudinal board with the transverse board in the bevel direction.

4. A combined panel furniture according to claim 2 or 3, wherein said longitudinal and transverse boards have reinforce frames in the two ends near the edges of the connecting sides respectively.

5. A combined panel furniture according to claim 1 or 2 or 3, wherein said longitudinal and transverse boards are plastic composite boards, said plastic composite boards comprises a plastic surface board and a plastic bottom board, and filling material filled between the two boards, said reinforce frames are hardware, said filling material is honeycomb cardboard, foam board or injection part.

6. A combined panel furniture according to claim 5, wherein said plastic board has support frames around the honeycomb cardboard or foam board, the reinforce frames connected to the support frames or the support frame and the reinforce frame is an integral hardware.

7. A combined panel furniture according to claim 5, wherein said reinforce frames comprises a closed frame or U-shaped frame consisted of pipe fittings or profiles and reinforce parts mounted in the corners of the plastic composite board, said reinforce parts in the corners are hardware or plastic parts.

8. A combined panel furniture according to claim 1 or 2 or 3, wherein the side edge of said transverse board connected to the bottom edge or top edge of the longitudinal board in 45 degree angle.

9. A combined panel furniture comprises longitudinal and transverse boards assembled vertically, wherein said longitudinal and said transverse boards are made from plastic composite boards, reinforce frames are disposed near the edges; further comprises connecting parts which are separate to said longitudinal and transverse boards and locked with the reinforce frames, the bottom edge or top edge of longitudinal board connected to the transverse board in bevel direction via connecting parts, and the connecting portion of the two connected parts are clamped or locked with each other to fixedly connect the longitudinal board with the transverse board.

10. A combined panel furniture according to claim 9, wherein said connecting parts are hardware extruded profiles or cast parts.

11. A combined panel furniture according to claim 9, wherein said connecting surface of said connecting part is a slant surface corresponding to the board body, the two connecting parts connecting with each other by their parallel slant surface respectively, the two connecting slant surfaces has tenon and corresponding mortise respectively.

12. A combined panel furniture according to claim 9 to 11, wherein said longitudinal and transverse boards are plastic composite boards, said plastic composite boards comprises a plastic surface board and a plastic bottom board, and filling material filled between the two boards, said reinforce frames are hardware, said filling material is honeycomb cardboard, foam board or injection parts.

13. A combined panel furniture according to claim 12, wherein said reinforce frames comprises a closed frame or U-shape frame comprising pipe fittings or profiles , and reinforce part mounted in the corner of the plastic composite board, said reinforce part in the corner is hardware or plastic part.

14. A combined panel furniture according to claim 9, wherein the side edge of said transverse board connected to the bottom edge or top edge of the longitudinal board in 45 degree angle.
